# EUROPÄISCHE PATENTANMELDUNG

(11) **EP 1 160 428 A2**
(43) Veröffentlichungstag der Anmeldung: **05.12.2001**
(21) Anmeldenummer: 01112787.5
(22) Anmeldetag: 28.05.2001
(51) Int. Cl.: F01N 7/18, B60K 13/04

(54) **Elastisches Lager für eine schwingungsisolierte Lagerung einer Abgasanlage an einem Fahrzeugboden**

(30) Priorität: 27.05.2000 DE 10026527
(71) Anmelder: Eras Entwicklung und Realisation adaptiver Systeme GmbH, 37085 Göttingen (DE)
(72) Erfinder: Gnauert, Uwe Dipl.-Phys., 37083 Göttingen (DE); Wimmel, Roger Dipl.-Phys., 37124 Rosdorf (DE)
(74) Vertreter: Patentanwälte Rehberg + Hüppe

(57) **Zusammenfassung**

Ein elastisches Lager (1) ist für eine schwingungsisolierte Lagerung einer Abgasanlage (2) an einem Fahrzeugboden eines Kraftfahrzeugs vorgesehen und weist eine Basis (3) zur starren Befestigung an dem Fahrzeugboden und einen Federkörper (4) aus Elastomerwerkstoff (5) auf, der eine Lagerbuchse oder -öse (6) für ein Befestigungselement (7) der Abgasanlage (2) gegenüber der Basis (3) elastisch abstützt. Mindestens eine Druckkammer (8) ist vorgesehen, die mit einem Druckmedium (13) beaufschlagbar ist, wobei sich durch die Beaufschlagung der Druckkammer (8) die Lage des Federkörpers (4) und/oder die Elastizität der Abstützung der Lagerbuchse bzw. -öse (6) gegenüber der Basis (3) verändert.

## Beschreibung

Die Erfindung bezieht sich auf ein elastisches Lager für eine schwingungsisolierte Lagerung einer Abgasanlage an einem Fahrzeugboden eines Kraftfahrzeugs, mit einer Basis zur starren Befestigung an dem Fahrzeugboden und mit einem Federkörper aus Elastomerwerkstoff, der eine Lagerbuchse oder -öse für ein Befestigungselement der Abgasanlage gegenüber der Basis elastisch abstützt.

Federkörper aus Elastomerwerkstoff werden bei elastischen Lagern für eine schwingungsisolierte Lagerung einer Abgasanlage an einem Fahrzeugboden eines Kraftfahrzeug deshalb bevorzugt verwendet, weil sie nicht nur schwingungsdämmende sondern auch schwingungsdämpfende Eigenschaften aufweisen.

Als nachteilig ist es jedoch von Federkörpern aus Elastomerwerkstoff bekannt, daß diese über ihre Lebenszeit hinweg Setzungsphänomene zeigen, wodurch sich die statische Nullage der Lagerbuchse bzw. -öse für das Befestigungselement der Abgasanlage gegenüber der Basis, d. h. dem Fahrzeugboden, verändert und wodurch sich auch die Elastizität der Anbindung des Befestigungselements an dem Fahrzeugboden ändern kann. Weiterhin ist eine ausgeprägte Variation der elastischen Eigenschaften mit der Temperatur gegeben. Dies bedeutet, daß die statische Nullage der Abgasanlage gegenüber dem Fahrzeugboden, um die herum sie dynamisch schwingt, ausgeprägten kurzfristigen Schwankungen mit der Erwärmung der elastischen Lager und ausgeprägten langfristigen Schwankungen mit ihrer Setzung zeigt.

Hieraus resultieren Schwierigkeiten, wenn Teile der Abgasanlage eine definierte Relativlage zu anderen Bauteilen eines Kraftfahrzeugs aufweisen sollen, die gegenüber dem Fahrzeugboden eine relativ gesehen starre Anordnung aufweisen. Ein Beispiel hierfür kann es sein, daß das Endrohr einer Abgasanlage zentrisch in einer Durchbrechung einer hinteren Stoßstange eines Kraftfahrzeugs angeordnet werden soll. Wenn diese Zentrierung bezüglich der statischen Mittellage verlorengeht, verliert gleichzeitig nicht nur der optische Eindruck der Anordnung, sondern es besteht auch die Gefahr, daß das Endrohr aufgrund dynamischer Schwingungen an der Stoßstange anschlägt.

Die Veränderung der Elastizität des Federkörpers aus Elastomerwerkstoff mit seiner Halterung bzw. Setzung und/oder der Temperatur führt dazu, daß bei der Abstimmung der Elastizität für eine optimale Schwingungsisolierung immer Kompromisse gemacht werden müssen. Die Abstimmung der Elastizität kann nicht so vorgenommen werden, daß sie für alle Temperaturen des Elastomerwerkstoffs und die gesamte Lebensdauer des elastischen Lagers optimal ist. Vielmehr ist die optimale Abstimmung beispielsweise nur nach der Setzung des Elastomerwerkstoffs und bei einer solchen Temperatur gegeben, wie sie sich als Betriebstemperatur für den Elastomerwerkstoff bei bestimmten Fahr- und Außenbedingungen einstellt.

Der Erfindung liegt die Aufgabe zugrunde, ein elastisches Lager der eingangs beschriebenen Art aufzuzeigen, das konstruktive Möglichkeiten aufweist, die voranstehend geschilderten Nachteile zu beseitigen.

Erfindungsgemäß wird diese Aufgabe dadurch gelöst, daß bei einem elastischen Lager der eingangs beschriebenen Art mindestens eine Druckkammer vorgesehen wird, die mit einem Druckmedium beaufschlagbar ist, wobei sich durch die Beaufschlagung der Druckkammer die Lage des Federkörpers und/oder die Elastizität der Abstützung der Lagerbuchse bzw. -öse gegenüber der Basis verändert.

Die beaufschlagbare Druckkammer stellt ein Mittel dar, um den oben beschriebenen Änderungen der Eigenschaften eines elastischen Lagers mit einem Federkörper aus Elastomerwerkstoff, die kurz- und langfristig über seine Lebensdauer auftreten, entgegenzuwirken. Durch die Anordnung der Druckkammer und ihre Gestaltung kann der Schwerpunkt ihrer Funktion zwischen einer Kompensation von Änderungen der mittleren statischen Lage des Federkörpers und/oder der Elastizität der Abstützung der Lagerbuchse bzw. -öse gegenüber der Basis verschoben werden. Eine gewisse Wechselwirkung zwischen diesen beiden Aspekten wird sich bei der Beaufschlagung der Druckkammer mit Druckmedium immer einstellen.

Vorzugsweise ist die Wandung der Druckkammer zumindest teilweise aus Elastomerwerkstoff ausgebildet. Dies bedeutet, daß sie zumindest zusammen mit dem Federkörper aus Elastomerwerkstoff ausbildbar ist. In einer bevorzugten Ausführungsform des neuen Lagers bildet der Federkörper aus Elastomerwerkstoff auch unmittelbar einen Teil der Wandung der Druckkammer aus. Hiermit ist auch eine direkte Ankopplung des Federkörpers aus Elastomerwerkstoff in funktioneller Hinsicht an die Druckkammer gegeben.

Gleichzeitig oder alternativ kann eine Wandung der Druckkammer teilweise von der Basis oder einer an die Basis angesetzten schiaufenförmigen Verliersicherung für das Befestigungselement ausgebildet sein. Eine solche Verliersicherung beispielsweise aus Federstahlband kann bezüglich der Einzelelastizitäten zwischen der Lagerbuchse bzw. -öse und der Basis mit dem Federkörper aus Elastomerwerkstoff in Reihe geschaltet sein.

Die Druckkammer bei dem neuen Lager kann durch mindestens eine Drosselplatte unterteilt sein, wodurch Schwingungen des Druckmediums in der Druckkammer gedämpft werden.

Um die Beaufschlagung der Druckkammer bei dem neuen Lager den sich jeweils ändernden Betriebsbedingungen anzupassen, ist vorzugsweise eine Steuerung vorgesehen, die diese Anpassung kontinuierlich vornimmt. So kann die Steuerung in Abhängigkeit eines Signals eines Lagesensors für die Abgasanlage Druckmedium in die Kammer einführen oder aus dieser ablassen. Die Steuerung kann aber auch zur Einstellung einer gewünschten Elastizität des Lagers Druckmedium in die Druckkammer einführen oder aus dieser ablassen. Dabei kann die gewünschte Elastizität des Lagers eine immer gleiche Elastizität oder aber eine für den jeweiligen Betriebszustand optimale Elastizität sein.

Das Druckmedium kann Druckluft und/oder eine Hydraulikflüssigkeit sein. Ein Druckluftsystem ist in vielen Kraftfahrzeugen bereits Standard und wird beispielsweise auch für Sitzverstellungen und dgl. verwendet. Ein Hydrauliksystem steht ebenfalls bei verschiedenen Kraftfahrzeugen zur Verfügung. Eine Kombination beider Druckmedien eröffnet besondere Möglichkeiten, weil Druckluft kompressibel ist und damit besondere elastische Eigenschaften aufweist, während Hydraulikmedium inkompressibel ist.

In einer weitergebildeten Ausführungsform des neuen Lagers sind zwei seitlich versetzt zueinander angeordnete Druckkammern vorgesehen. Damit ist es nicht nur möglich, die Lage und die Elastizität des Lagers in einer Richtung sondern auch noch in einer weiteren Richtung zu verstellen. Entsprechend kann eine Steuerung in Abhängigkeit von den Signalen von zwei Lagesensoren für die Abgasanlage Druckmedium selektiv in die beiden Druckkammern einführen oder aus diesen ablassen.

Die Erfindung wird im folgenden anhand von Ausführungsbeispielen näher erläutert und beschrieben, dabei zeigt:
- Figur 1: den prinzipiellen Aufbau einer ersten Ausführungsform des neuen elastischen Lagers für eine Abgasanlage,
- Figur 2: die Lage eines Endrohrs einer Abgasanlage in einer Durchbrechung in einer hinteren Stoßstange eines Kraftfahrzeugs,
- Figur 3: eine zweite Ausführungsform des neuen elastischen Lagers und
- Figur 4: eine dritte Ausführungsform des neuen elastischen Lagers.

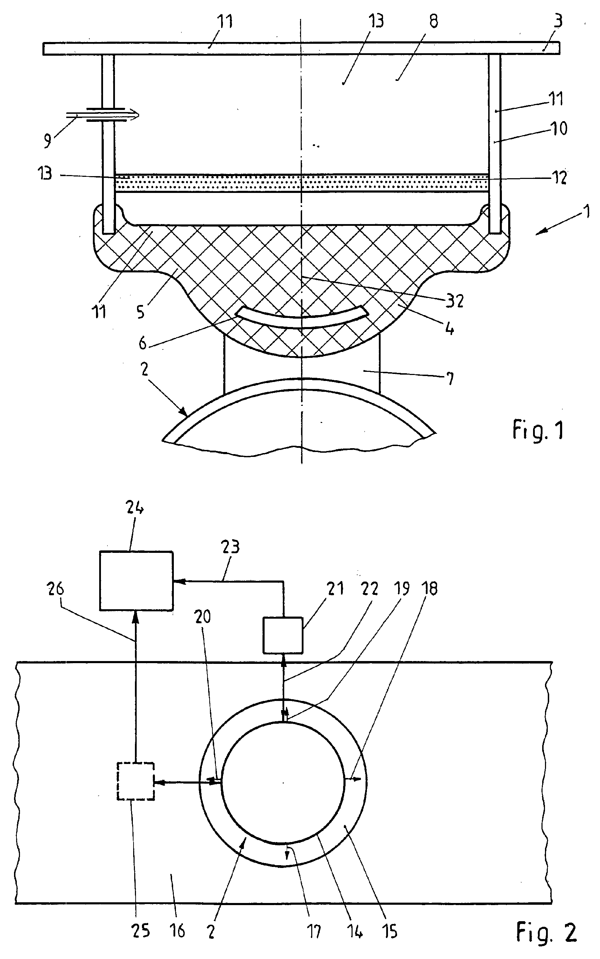

Das in Figur 1 dargestellte elastische Lager 1 dient zur Aufhängung einer hier teilweise wiedergegebenen Abgasanlage 2 an einem hier nicht dargestellten Fahrzeugboden eines Kraftfahrzeugs. Das elastische Lager 1 weist eine Basis 3 zur Befestigung an dem Fahrzeugboden und einen Federkörper 4 aus Elastomerwerkstoff 5 zur Abstützung einer Lageröse 6 für ein Befestigungselement 7 der Abgasanlage 2 auf. Der Federkörper 4 stützt die Lageröse 6 elastisch gegenüber der Basis 3 ab. Zwischen der Basis 3 und dem Federkörper 4 ist eine Druckkammer 8 für die Beaufschlagung mit Druckluft 9 ausgebildet. Die Wandung 10 der Druckkammer 8 wird dabei durch die Basis 3, den Federkörper 4 aus Elastomerwerkstoff 5 und eine seitliche Wandung 11 geformt. Durch unterschiedlich starke Beaufschlagung der Druckkammer 8 mit Druckluft 9 verlagert sich die Lageröse 6 bezüglich ihrer statischen Mittellage unterschiedlich weit nach unten. Gleichzeitig wird die Elastizität der Aufhängung des Befestigungselements 7 durch den Federkörper 4 aus Elastomerwerkstoff 5 schon allein durch seine unterschiedliche Vorspannung verändert. In der Druckkammer 8 ist darüberhinaus eine poröse Platte 12 als Drosselplatte 13 vorgesehen, um Schwingungen der als Druckmedium 13 in der Druckkammer 8 verwendeten Druckluft 9 zu dämpfen.

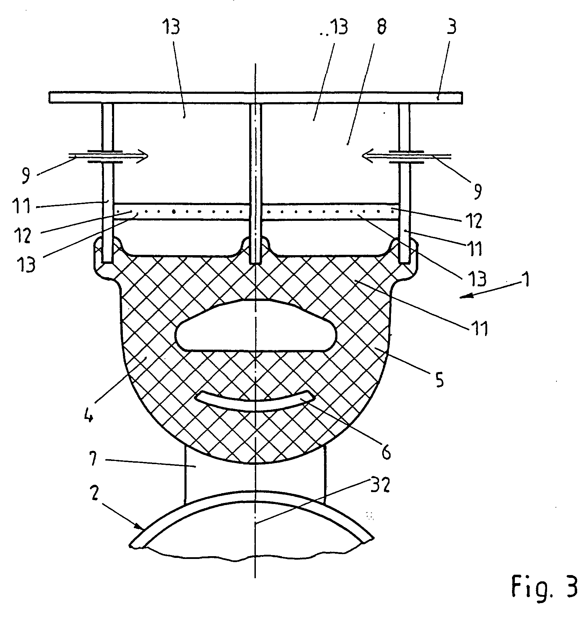

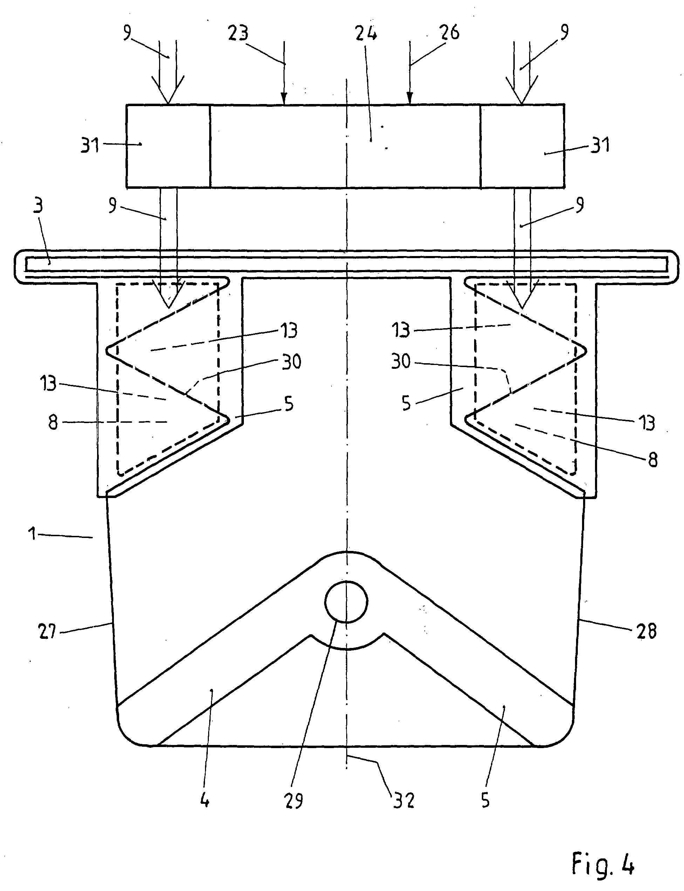

Besonders interessant ist die Verwendung eines elastischen Lagers gemäß Figur 1, wenn beispielsweise ein Endrohr 14 der Abgasanlage 2 innerhalb einer Durchbrechung 15 in einer hinteren Stoßstange 16 eines Kraftfahrzeugs zentriert werden soll. Die zentrische Lage des Endrohrs 14 in der Durchbrechung 15 ist nicht nur aus optischen Gründen bevorzugt, sie beläßt auch in allen Richtungen 17 bis 20 das meiste Spiel für Schwingungen des Endrohrs 14 gegenüber der Stoßstange 16, ohne daß es zu Anschlägen kommt. Es ist aber so, daß insbesondere durch längerfristige Setzungsprozesse und kurzfristige Schwankungen der Elastizität des Federkörpers 4 aus Elastomerwerkstoff 5 gemäß Figur 1 aufgrund wechselnder Temperaturen ausgeprägte vertikale Lageverschiebungen der Abgasanlage 2 in vertikaler Richtung zu beobachten sind. Diesen Lageverschiebungen kann durch eine unterschiedlich starke Beaufschlagung der Druckkammer 8 durch Druckluft 9 entgegengewirkt werden. Hierzu registriert beispielsweise ein Lagesensor 21 seinen aktuellen Abstand 22 zu dem Endrohr 14 oder einem anderen Bezugspunkt und gibt ein entsprechendes Ausgangssignal 23 aus. Eine Steuerung 24 vergleicht das Ausgangssignal 23 mit einem Sollwert. In Abhängigkeit von der Differenz wird ein Dreiwegeventil angesteuert, das eine Druckluftquelle mit der Druckkammer 8 verbindet oder Druckluft 9 aus der Druckkammer 8 abläßt, bis der Ist-Abstand 22 an den Soll-Abstand herangeführt ist. Für dieses Heranführen steht relativ viel Zeit zur Verfügung, weil die Lageänderungen der statischen Mittellage des Endrohrs 14 gegenüber der Stoßstange 16 nur langsam sind. An dem Sensor 21, die Steuerung 24 und die hier nicht dargestellte Druckluftquelle sowie das hier nicht dargestellte Dreiwegeventil werden von daher keine besonders hohen Anforderungen gestellt. Es ist allerdings wichtig, daß der Sensor 21 gegenüber Verschmutzung und hohen Temperaturen unsensibel ist. Überdies sollte er träge sein, um dynamische Lageänderungen des Endrohrs 2 unberücksichtigt zu lassen. Alternativ kann er mit einem Tiefpaßfilter kombiniert werden. Wenn es auch zur horizontalen Lageveränderung des Endrohrs 14 gegenüber der Stoßstange 16 kommt, können diese durch einen weiteren Lagesensor 25 erfaßt werden, der ein weiteres Ausgangssignal 26 abgibt, das von der Steuerung 24 in entsprechender Weise wie das Ausgangssignal 23 verarbeitet wird. Allerdings ist das elastische Lager gemäß Figur 1 nicht dafür geeignet, auch horizontalen Lageveränderungen der Abgasanlage entgegenzuwirken. Dies ist jedoch mit dem elastischen Lager 1 in den Ausführungsformen gemäß den folgenden Figuren 3 und 4 machbar.

Das in Figur 3 dargestellte elastische Lager 1 unterscheidet sich von demjenigen gemäß Figur 1 durch das Vorhandensein von zwei Druckkammern 8, die getrennt voneinander mit Druckmedium 13, bei dem es sich wiederum um Druckluft 9 aber auch um ein inkompressibles Hydraulikmedium handeln kann, beaufschlagbar sind und die hier symmetrisch zu einer Symmetrieebene 32 des Lagers 1 angeordnet sind. In beiden Druckkammern 8 ist eine poröse Platte 12 als Drosselplatte 13 angeordnet. Der untere Teil der Wandung 11 beider Druckkammern 8 wird durch den Federkörper 4 aus Elastomerwerkstoff 5 ausgebildet, der die Lageröse 6 für das Befestigungselement 7 der Abgasanlage 2 aufweist. Durch unterschiedlich starke Beaufschlagung der Druckkammern 8 mit Druckmedium 13 ist eine horizontale Verlagerung der Lageröse 6 zur Einstellung einer gewünschten Lage der Abgasanlage 2 möglich.

Dieselbe Möglichkeit ist bei dem elastischen Lager 1 gemäß Figur 4 gegeben. Hier ist an die Basis 3 ein geformtes Federstahlband 27 als Verliersicherung 28 für die in dieser Figur nicht dargestellte Abgasanlage angesetzt. Der Federkörper 4 aus Elastomerwerkstoff 5 stützt sich an dem Federstahlband 27 ab und weist hier eine Lagerbuchse 29 für ein Befestigungselement der Abgasanlage auf. Zwei Druckkammern 8 sind im Ansatzbereich des Federstahlbands 27 an die Basis 3 durch angespritzten Elastomerwerkstoff 5 ausgebildet. Durch die Druckkammern 8 erstreckt sich zick-zack-förmig das Federstahlband 27, welches zumindest dort mit feinen Durchbrechungen 30 versehen ist und so die Drosselplatte 13 ausbildet. Auch bei dem elastischen Lager 1 gemäß Figur 4 kann durch unterschiedliche Beaufschlagung der beiden Druckkammern 8 mit dem Druckmedium 13 eine horizontale Verschiebung der Lagerbuchse 29 erreicht werden. Die Ansteuerung der Druckkammern 8 erfolgt durch die Steuerung 24 über zwei Dreiwegeventile 31, die von einer hier nicht dargestellten Druckluftquelle kommende Druckluft 9 den Druckkammern 8 selektiv zuführen bzw. aus diesen ablassen.

### BEZUGSZEICHENLISTE

- 1 -: Lager
- 2 -: Abgasanlage
- 3 -: Basis
- 4 -: Federkörper
- 5 -: Elastomerwerkstoff
- 6 -: Lageröse
- 7: Befestigungselement
- 8 -: Druckkammer
- 9 -: Druckluft
- 10 -: Seitenwandung

- 11 -: Wandung
- 12 -: poröse Platte
- 13 -: Drosselplatte
- 14 -: Endrohr
- 15 -: Durchbrechung
- 16 -: Stoßstange
- 17 -: Richtung
- 18 -: Richtung
- 19 -: Richtung
- 20 -: Richtung

- 21 -: Lagesensor
- 22 -: - Abstand
- 23: Ausgangssignal
- 24 -: Steuerung
- 25 -: Lagesensor
- 26 -: Ausgangssignal
- 27 -: Federstahlband
- 28 -: Verliersicherung
- 29 -: Lagerbuchse
- 30 -: Durchbrechungen

- 31 -: Dreiwegeventil
- 32 -: Symmetrieebene

## Patentansprüche

1. Elastisches Lager für eine schwingungsisolierte Lagerung einer Abgasanlage an einem Fahrzeugboden eines Kraftfahrzeugs, mit einer Basis zur starren Befestigung an dem Fahrzeugboden und mit einem Federkörper aus Elastomerwerkstoff, der eine Lagerbuchse oder -öse für ein Befestigungselement der Abgasanlage gegenüber der Basis elastisch abstützt, **dadurch gekennzeichnet, daß** mindestens eine Druckkammer (8) vorgesehen ist, die mit einem Druckmedium (13) beaufschlagbar ist, wobei sich durch die Beaufschlagung der Druckkammer (8) die Lage des Federkörpers (4) und/oder die Elastizität der Abstützung der Lagerbuchse (29) bzw. -öse (6) gegenüber der Basis (3) verändert.

2. Lager nach Anspruch 1, **dadurch gekennzeichnet, daß** eine Wandung (11) der Druckkammer (8) zumindest teilweise aus Elastomerwerkstoff (5) ausgebildet ist.

3. Lager nach Anspruch 2, **dadurch gekennzeichnet, daß** der Federkörper (4) aus Elastomerwerkstoff (5) einen Teil der Wandung (11) der Druckkammer (8) ausbildet.

4. Lager nach einem der Ansprüche 1 bis 3, **dadurch gekennzeichnet, daß** eine Wandung (11) der Druckkammer (8) teilweise von der Basis (3) und/oder einer an die Basis angesetzten schlaufenförmigen Verliersicherung (28) für das Befestigungselement (7) ausgebildet wird.

5. Lager nach einem der Ansprüche 1 bis 4, **dadurch gekennzeichnet, daß** die Druckkammer (8) durch mindestens eine Drosselplatte (13) unterteilt ist.

6. Lager nach einem der Ansprüche 1 bis 5, **dadurch gekennzeichnet, daß** eine Steuerung (24) vorgesehen ist, die in Abhängigkeit eines Signals (23, 26) eines Lagesensors (21, 25) für die Abgasanlage (2) Druckmedium (13) in die Druckkammer (8) einführt oder aus dieser abläßt.

7. Lager nach einem der Ansprüche 1 bis 6, **dadurch gekennzeichnet, daß** eine Steuerung (24) vorgesehen ist, die zur Einstellung einer gewünschten Elastizität des Lagers (1) Druckmedium (13) in die Druckkammer (8) einführt oder aus dieser abläßt.

8. Lager nach einem der Ansprüche 1 bis 7, **dadurch gekennzeichnet, daß** das Druckmedium (13) Druckluft (9) und/oder eine Hydraulikflüssigkeit ist.

9. Lager nach einem der Ansprüche 1 bis 8, **dadurch gekennzeichnet, daß** zwei seitlich versetzt zueinander angeordnete Druckkammern (8) vorgesehen sind.

10. Lager nach Anspruch 9, **dadurch gekennzeichnet, daß** eine Steuerung in Abhängigkeit von den Signalen von zwei Lagesensoren (21, 25) für die Abgasanlage (2) Druckmedium (13) selektiv in die beiden Druckkammern (8) einführt oder aus diesen abläßt.
